Europäisches Patentamt

European Patent Office

Office européen des brevets

(11) Publication number: **0 224 969**

**A1**

(12) # EUROPEAN PATENT APPLICATION

(21) Application number: 86202147.4

(51) Int. Cl.⁴: **F16L 13/10**

(22) Date of filing: 01.12.86

(30) Priority: 02.12.85 NL 8503326

(43) Date of publication of application:
10.06.87 Bulletin 87/24

(84) Designated Contracting States:
CH DE FR GB LI NL

(71) Applicant: **ULTRA-CENTRIFUGE NEDERLAND N.V.**
**Planthofsweg 77**
**NL-7601 PJ Almelo(NL)**

(72) Inventor: **Buisman,Karel Leendert**
**Schubertstraat 22**
**NL-7604 GH Almelo(NL)**
Inventor: **Rake, Gerrit Jan**
**J.L. Pisuissestraat 30**
**NL-7558 LS Hengelo(NL)**
Inventor: **Rosielle, Karel**
**Mennistenhoek 103**
**NL-7607 DD Almelo(NL)**

(74) Representative: **Smulders, Theodorus A.H.J. et al**
**Vereenigde Octrooibureaux Nieuwe Parklaan 107**
**NL-2587 BP 's-Gravenhage(NL)**

(54) **A seal functioning under vacuum conditions between two interconnected parts and a method of making the same.**

(57) A seal functioning under vacuum conditions between two parts (1,2) placed one within the other and interconnected by means of an adhesive, with the bonded surfaces (1f,2f) of the parts having substantially the form of surfaces of revolution. At least one of said surfaces has at least one gas collecting space (4) extending according to an endless line along the circumference of the respective part.

FIG.8

## A seal functioning under vacuum conditions between two interconnected parts and a method of making the same.

The present invention relates to a seal functioning under vacuum conditions between two interconnected parts and to a method of making the same. The invention relates more in particular to a seal of this kind between two parts that are placed one within the other and are connected together by an adhesive, with the bonded surfaces of the parts having substantially the form of surfaces of revolution. Such a seal is known.

As examples of applications thereof can be mentioned: the sealing interconnection of pipes placed partly or entirely one within the other, the sealing interconnection of pipes placed end-to-end by means of a bush or sleeve, the sealing fitting of a part or member in a passage through for example a glass wall, the sealing connection of a bellows to a bush having e.g. a flange. This enumeration is not exhaustive, numerous other applications are possible.

Uniting by means of glueing has advantages over soldering, as it is often simpler, and as it is a clean technique leaving no flux agent, as in soldering. With materials other than metal, e.g. synthetic plastics or glass, glueing is practically the only practical possibility of providing a sealing joint usable under vacuum conditions.

It is an object of the present invention to improve the above known seal in such a manner that, in conjunction with the application of a glue type already having a good gas tightness itself, a high gastightness is obtained, which is especially important in vacuum applications, and that a bond of great strength is obtained.

To achieve these objects, the seal according to the present invention is characterized in that at least one of the interconnected surfaces is provided with at least one gas collecting space extending along an endless line along the circumference of the part in question.

In a suitable embodiment of the seal according to the present invention, the or each gas collecting space is an annular groove. The endless line lies suitably in a plane perpendicular to the main axes of the surfaces of revolution. This simplifies the construction but is not necessary.

Examples of suitable surfaces of revolution are cylinders or parts of cones.

The present invention also relates to a method of making the seal according to the invention, said method being characterized in that, using parts having substantially the form of surfaces of revolution, with a surface of at least one of the parts being provided with at least one gas collecting space, in the form of an endless line extending along the circumference of the respective part, a surface of at least one of the parts, after having been cleaned, is coated with glue, after which the parts are slid one into the other with coinciding main axes of the surfaces of revolution, the parts being rotated about the said main axes, which operations are continued until the parts have reached the desired relative position, after which the glue is allowed to set.

The construction and the method according to the present invention allow to obtain major advantages. Studies have revealed that when making the known seal, while the parts being glued together, are slid one into the other air is carried along into the glued clearance between the surfaces of the parts to be jointed. This air forms long lines and islets in the glue in the clearance, which displaces the glue locally. As a result, especially in vacuum applications, the sealing effect of the glue in the clearance becomes unreliable and also the strength of the glued joint is adversely affected.

By using the gas collecting space(s) according to the present invention it is advantageously achieved that the air carried along can be collected in the gas collecting space(s) and that the above lines and islets of air in the glue in the clearance withdraw, as it were, in the form of bubbles into said gas collecting space(s), so that the glued clearance itself becomes free of gas. There is thus obtained a reliable sealing effect of the glue in the glued clearance, as well as a strong glued joint.

In the seal according to the present invention, the "thickness" or the width of the clearance between the parts to be cemented together is important. When said clearance wherein the glue is to be placed is too large, air bubbles may be formed already in the clearance itself, which bubbles will show no tendency of displacement towards the gas collecting space(s). However, when the clearance is narrow, only the above long lines and/or islets of air will be formed therein, which will have the tendency of contracting into bubbles. This tendency can only be accommodated in the gas collecting space(s). It has been found that in a clearance wider than 0.2 mm, the gas collecting space(s) no longer have the desired effect. A lower limit of the clearance width is defined only by the dimensional tolerances of the parts to be jointed. In practice, parts having an internal or external diameter of about 35 mm have been so jointed, using a clearance width of 0.01 mm.

It is further desirable to use at least three grooves as gas collecting spaces in side-by-side relationship. The central groove in such a construction is then practically reliable as to 100%. The lands between the grooves should not be too wide, since otherwise the air lines formed in the clearance above the lands cannot withdraw into the grooves. Lands having a width of 1-1.5 mm have been found to be satisfactory. The width of the groove is less critical. Widths of one to some millemeters are satisfactory. The depth of the groove should be such that bubbles can be formed. A groove depth (i.e. height of the land beside the groove) at least equal to the width of the clearance above the lands seems desirable, so that the glue coat at the location of a groove is twice as thick as at the location of a land. Furthermore, a slightly bevelled wall of the groove has been found to be advantageous.

The glue to be used should be suitable for vacuum seals. A glue which generates little gas is preferred, since otherwise, in addition to the problem of entrained air, there will be the additional problem of formed gas. The glue should also not set too quickly and be sufficiently fluid in order that the air lines and islets have an opportunity of retracting as bubbles into the gas collecting spaces before the glue is set. Both cold setting and thermosetting epoxy glues, with or without a filler, may be employed for instance.

It is observed that the use of grooves in the surface of a part having the form of a surface of revolution, to be jointed to a similar part is known per se, e.g. from French patent 2,061,360. In this known construction, there is no question of a seal functioning under vacuum conditions, however. It concerns the bonding of hoses, i.e., more or less flexible parts of polymeric synthetic plastics material. The grooves are proposed so as to ensure a sufficient quantity of glue in the clearance between the parts.

Some embodiments of the present invention will now be described, by way of example, with reference to the accompanying drawings, in which:

Fig. 1 is a top view of a first embodiment of the seal according to the present invention;

Fig. 2 is a longitudinal section of the embodiment shown in Fig. 1;

Fig. 3 shows one half of the longitudinal section shown in Fig. 2 on an enlarged scale;

Fig. 4 shows a development A-A of the surface having gas collecting spaces pertaining to the embodiment shown in Figs. 1, 2 and 3;

Fig. 5 shows a development A-A of a surface having gas collecting spaces in a pattern deviating from that of Fig. 4;

Fig. 6 shows a development A-A of a surface having gas collecting spaces of a form deviating from that shown in Figs. 4 and 5;

Fig. 7 is a top view of a second embodiment of the seal according to the present invention; and

Fig. 8 is a longitudinal section view of the embodiment shown in Fig. 7.

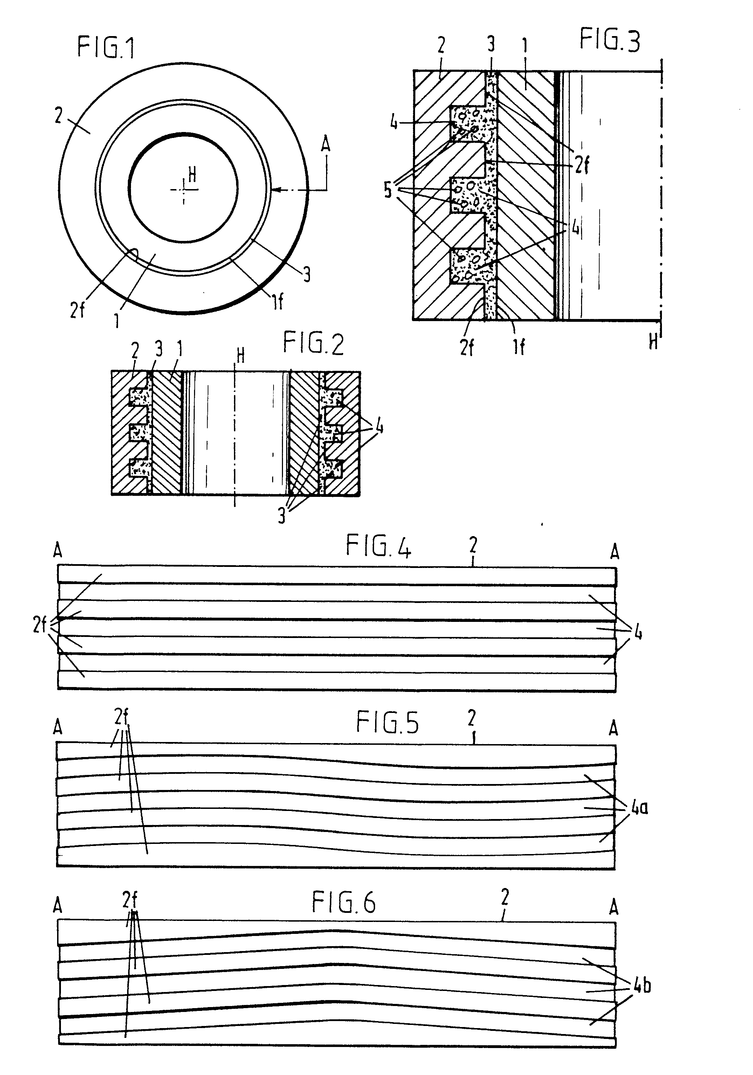

The embodiment of the seal according to the present invention, as shown in Figs. 1, 2, 3 and 4, will now be described in more detail.

A first part 1 is constructed as a cylindrical bush whose cylindrical outer surface is indicated at 1f. Part 1 is placed in a cylindrical bush 2 whose cylindrical inner surface is indicated at 2f. Surfaces 1f and 2f are surfaces of revolution with coinciding main axes H. Surface 2f has three gas collecting spaces 4, each extending according to a respective endless line along the inner circumference of the part 2. In this embodiment, the gas collecting spaces 4 are annular grooves 4 and each of the endless lines lies in a respective plane perpendicular to the main axes H.

Between surfaces 1f and 2f is a clearance 3 filled with glue. In Figs. 2 and 3 the glue is indicated by a dotted line. As clearly shown in Fig. 3, the glued clearance 3 is entirely filled with glue, while grooves 4 are filled with glue and with gas bubbles 5.

The annular grooves 4a,4b, as shown in Figs. 5 and 6, differ from grooves 4 shown in Figs. 2 and 3 in the main in that they extend according to endless lines not lying in planes perpendicular to the main axes H.

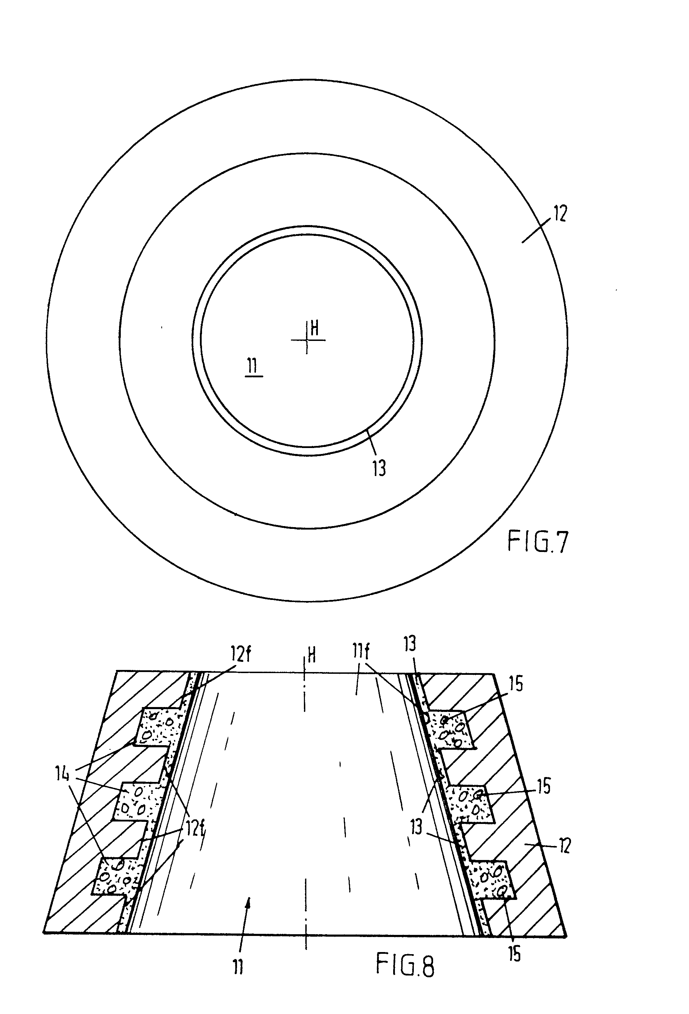

The embodiment shown in Figs. 7 and 8 substantially corresponds with the embodiment shown in Figs. 1, 2, 3 and 4, with the difference that the surfaces of revolution in this case are no cylinders but parts of cones.

A first solid part 11 has an outer surface 11f, being a part of a cone with main axis H. This part 11 is placed in a second part 12 whose inner surface 12f has the form of a cone with main axis H. Here, too, the main axes of the surfaces of revolution 11f and 12f coincide.

Surface 12f has three gas collecting spaces 14, each extending according to a respective endless line along the inner circumference of part 12. Gas collecting spaces 14 are annular grooves 14 and each of the endless lines lies in a respective plane perpendicular to the main axes H.

Between surfaces 11f and 12f is a clearance 13 filled with glue. Fig. 8 shows the clearance 13 entirely filled with glue, whereas grooves 14 are filled with glue and with gas bubbles 15.

The seal according to the present invention is made as follows.

At least one of the surfaces lf, 2f of parts I and 2, respectively, (llf, l2f of parts II and I2, respectively), after cleaning, is coated with glue, after which parts I and 2 (II and I2) are slid one into the other with coinciding main axes, with parts I and 2 - (II and I2) being rotated to each other relatively about main axes H. These operations are continued until parts I and 2 (II and I2) have reached the desired relative position. Finally, the glue is allowed to set.

In the method described, the air carried along forms lines and islets in the glue. The adhesion in the glued clearance 3 (I3) between surfaces lf, 2f - (llf,l2f) is presumed to be greater than in grooves 4 (4a,4b,I4). As a consequence the air will tend to move from clearance 3 (I3) to grooves 4 (4a,4b,I4), where a lower pressure prevails than in clearance 3 (I3) and of forming bubbles at that location.

It is thus achieved that practically no air is present in the glue in the clearance 3 (I3) after setting. As a result, the adhesive coat in clearance 3 (I3) forms a reliable gas seal, which is important especially in vacuum applications. Moreover, the glue coat in clearance 3 (I3) forms a strong bond between the surfaces of the parts, since air is practically lacking in the glue coat. The radial dimension of the glue clearance is preferably small e.g. in the order of 0.I-0,2 mm.

Many types of glue can be used, e.g.:

    a. Two-component cold setting epoxy glues, such as Vacuum Seal, Torr Seal and various Araldite types.

    b. Single glues:

       I. Anaerobic glues (locktite 306 with activator T). These glues set in the absence of air.

       2. Single epoxy glues (Araldite and Autostic). These glues set by heat supply.

## Claims

I. A seal functioning under vacuum conditions between two parts placed one within the other and interconnected by means of an adhesive, with the bonded surfaces of the parts having substantially the form of surfaces of revolution, characterized in that at least one of the bonded surfaces has at least one gas collecting space extending according to an endless line along the circumference of the respective part.

2. A seal according to claim I, characterized in that the or each gas collecting space is an annular groove.

3. A seal according to claims I-2, characterized in that the clearance between the parts outside the gas collecting space(s) has a width not exceeding 0.2 mm.

4. A seal according to claims I-3, characterized in that more than one gas collecting space is used and the width of the land between adjoining spaces does not exceed I.5 mm.

5. A method of making a seal according to any of claims I-4, characterized in that, using parts having substantially the form of surfaces of revolution, with a surface of at least one of the parts being provided with at least one gas collecting space, in the form of an endless line extending along the circumference of the respective part, a surface of at least one of the parts, after having been cleaned, is coated with glue, after which the parts are slid one into the other with coinciding main axes of the surfaces of revolution, while the parts are rotated relatively to each other about said main axes, which operations are continued until the parts have reached the desired relative position, after which the glue is allowed to set.

FIG.1

FIG.3

FIG.2

FIG.4

FIG.5

FIG.6

FIG.7

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-2 254 238 (MASSON) <br> * Figure 1; claims * | 1-5 | F 16 L 13/10 |
| A | DE-A-2 627 241 (VAHLBRAUK) <br> * Figure; page 8, lines 1-34 * | 1 | |
| A | GB-A-1 112 326 (ANGER) <br> * Figures 1,4; page 2, lines 114-123 * | 1 | |
| A | GB-A-1 046 041 (MACHINES DU HAUT-RHIN) <br> * Figure 3 * | 1 | |
| A | FR-A-2 172 196 (STEWING) <br> * Claims; figures 1,3 * | 1,2 | TECHNICAL FIELDS SEARCHED (Int. Cl.4) |
| A | DE-A-2 707 492 (BOSTIK) <br> * Figures 1,4; claims * | 1,2,4 | F 16 L |
| D,A | FR-A-2 061 360 (SOLVAY) <br> * Figures 1,6; claims * | 1-5 | |

The present search report has been drawn up for all claims

| Place of search | Date of completion of the search | Examiner |
|---|---|---|
| THE HAGUE | 29-01-1987 | SCHAEFFLER C.A.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82